# EUROPEAN PATENT SPECIFICATION

(11) **EP 4 365 780 B1**
(45) Date of publication and mention of the grant of the patent: **18.02.2026**
(21) Application number: 22205846.3
(22) Date of filing: 07.11.2022
(51) Int. Cl.: H04L 9/40, G06N 3/098, H04L 41/0893, H04L 41/14, G06N 20/00, H04L 41/16

(54) **APPARATUS, METHOD, AND COMPUTER PROGRAM FOR TRAINING A MODEL FOR MANAGING A NETWORK**
VORRICHTUNG, VERFAHREN UND COMPUTERPROGRAMM ZUM TRAINIEREN EINES NETZWERKVERWALTUNGSMODELLS
APPAREIL, PROCÉDÉ ET PROGRAMME INFORMATIQUE D'ENTRAÎNEMENT D'UN MODÈLE DE GESTION DE RÉSEAU

(43) Date of publication of application: 08.05.2024
(73) Proprietor: Nokia Solutions and Networks Oy, 02610 Espoo (FI)
(72) Inventor: BEGA, Dario, 80802 Munich (DE); CONTE, Alberto, 94240 L'Hay-les-Roses (FR); SUBRAMANYA, Tejas, 81539 Munich (DE)
(74) Representative: Page White Farrer

(56) References cited:
- US-A1- 2022 158 888
- KANG JIAWEN ET AL: "Reliable Federated Learning for Mobile Networks", vol. 27, no. 2, 14 October 2019 (2019-10-14), US, pages 72 - 80, XP093000622, ISSN: 1536-1284, Retrieved from the Internet <URL:https://arxiv.org/pdf/1910.06837.pdf> [retrieved on 20230320], DOI: 10.1109/MWC.001.1900119
- HUANG JIYUE ET AL: "An Exploratory Analysis on Users' Contributions in Federated Learning", 2020 SECOND IEEE INTERNATIONAL CONFERENCE ON TRUST, PRIVACY AND SECURITY IN INTELLIGENT SYSTEMS AND APPLICATIONS (TPS-ISA), IEEE, 28 October 2020 (2020-10-28), pages 20 - 29, XP033880834, DOI: 10.1109/TPS-ISA50397.2020.00014

## Description

### Field of the disclosure

The present disclosure relates to an apparatus, a method, and a computer program for training a model for managing a network.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

KANG JIAWEN ET AL: "Reliable Federated Learning for Mobile Networks" provides techniques to improve the reliability of federated learning systems.

US2022/158888A1 provides techniques for removing an abnormal client in federated learning systems.

HUANG JIYUE ET AL: "An Exploratory Analysis on Users' Contributions in Federated Learning" studies the impact of incentive mechanisms on model quality of federated learning systems.

### Summary

The invention relates to an apparatus, method and computer program as set forth In the claims. It will be understood that aspects of this disclosure falling outside the scope of the claims may not be part of the invention but may be useful to understand the invention.

According to an aspect there is provided an apparatus comprising: means for receiving, from a distributed node, local dataset information comprising characteristics of a local dataset of the distributed node; means for determining whether to select the distributed node for training a local model for managing a network based on the local dataset information; and means for sending, to the distributed node, an indication as to whether the distributed node has been selected for training a model for managing a network.

The local dataset information may comprise at least one of: a local dataset size, a local dataset statistics or a local dataset bias metrics.

The local dataset size may comprise a number of data objects of the local dataset.

The local dataset statistics may comprise at least one of: a number of labels of a class (i.e. a class size); a number of labels of a class compared to a total number of labels of all classes (i.e. a class distribution which can be expressed as a percentage), a missing value of a feature or a range of values of a feature.

The local dataset bias metrics may comprise a difference between a number of labels of a class compared to a total number of labels of all classes and a number of labels of another class over the total number of labels of all classes (i.e. a difference of class distributions).

The apparatus may comprise: means for assigning a score to the distributed node based on the local dataset information; and means for determining whether to select the distributed node for training the model for managing the network based on the score assigned to the distributed node.

If the score assigned to the distributed node is above a threshold, the distributed node may be selected for training the model for managing the network.

If the score assigned to the distributed node is below a threshold, the distributed node may not be selected for training the model for managing the network.

The apparatus may comprise: means for determining whether the distributed node is a potential malicious distributed node based on the local dataset information; and means for determining whether to select the distributed node for training the model for managing the network based on whether the distributed node is a potential malicious distributed node.

If the distributed node is a potential malicious distributed node, the distributed node may not be selected for training the model for managing a network. Alternatively, if the distributed node is a potential malicious distributed node, the distributed node may be selected for training the model for managing the network. Locally trained model parameters from a malicious distributed node may be given a smaller weigh than locally trained model parameters from a non-malicious distributed node.

If the distributed node is not a potential malicious distributed node, the distributed node may be selected for training a local model for managing a network.

The apparatus may comprise: means for selecting the distributed node for training the model for managing the network; means for sending, to the distributed node, an indication that the distributed node has been selected for training the local model for managing the network; and means for receiving, from the distributed node, locally trained model parameters.

The apparatus may comprise: means for generating aggregated model parameters based on the locally trained model parameters.

The apparatus may comprise: means for clustering the distributed node with another distributed node based on the score assigned to the distributed node; and
means for generating cluster specific aggregated model parameters based on the locally trained model parameters.

The apparatus may comprise: means for determining to not select the distributed node for training the model for managing the network; and means for sending, to the distributed node, an indication that the distributed node has not been selected for training the model for managing the network.

The apparatus may comprise: means for sending, to the distributed node, global dataset information characterizing the local dataset in relation to a global dataset and/or a global dataset and/or means for sending a score assigned to the distributed node; and means for receiving updated local dataset information comprising characteristics of an updated local dataset of the distributed node.

The global dataset information may comprise at least one of: a global dataset size, a a local data set size compared to a global dataset size (which can be expressed as a percentage), a global dataset bias metrics or a global dataset statistics.

According to an aspect there is provided an apparatus comprising at least one processor and at least one memory storing instructions that, when executed by the at least one processor, cause the apparatus at least to: receive, from a distributed node, local dataset information comprising characteristics of a local dataset of the distributed node; determine whether to select the distributed node for training a local model for managing a network based on the local dataset information; and send, to the distributed node, an indication as to whether the distributed node has been selected for training a model for managing a network.

According to an aspect there is provided an apparatus comprising circuitry configured to: receive, from a distributed node, local dataset information comprising characteristics of a local dataset of the distributed node; determine whether to select the distributed node for training a local model for managing a network based on the local dataset information; and send, to the distributed node, an indication as to whether the distributed node has been selected for training a model for managing a network.

According to an aspect there is provided a method comprising: receiving, from a distributed node, local dataset information comprising characteristics of a local dataset of the distributed node; determining whether to select the distributed node for training a local model for managing a network based on the local dataset information; and sending, to the distributed node, an indication as to whether the distributed node has been selected for training a model for managing a network.

According to an aspect there is provided a computer program comprising computer executable code which when run on at least one processor is configured to: receive, from a distributed node, local dataset information comprising characteristics of a local dataset of the distributed node; determine whether to select the distributed node for training a local model for managing a network based on the local dataset information; and send, to the distributed node, an indication as to whether the distributed node has been selected for training a model for managing a network.

According to an aspect there is provided an apparatus comprising means for: means for sending, to a central node, local dataset information comprising characteristics of a local dataset of the apparatus; and
means for receiving, from the central node, an indication as to whether the apparatus has been selected for training a model for managing a network.

The apparatus may comprise: means for receiving, from the central node, an indication that the apparatus has been selected for training the model for managing the network; means for locally training model parameters; and means for sending, to the central node, the locally trained model parameters.

The apparatus may comprise: means for receiving, from the central node, global dataset information and/or a score assigned to the apparatus based on the local dataset information; means for determining a local dataset bias based on the local dataset information, the global dataset information and/or the score assigned to the apparatus; means for updating the local dataset to mitigate the local dataset bias; and means for sending, to the central node, updated local dataset information comprising characteristics of the updated local dataset.

According to an aspect there is provided an apparatus comprising at least one processor and at least one memory including computer code for one or more programs, the at least one memory and the computer code configured, with the at least one processor, to cause the apparatus at least to: send, to a central node, local dataset information comprising characteristics of a local dataset of the apparatus; and receive, from the central node, an indication as to whether the apparatus has been selected for training a model for managing a network.

According to an aspect there is provided an apparatus comprising circuitry configured to: send, to a central node, local dataset information comprising characteristics of a local dataset of the apparatus; and receive, from the central node, an indication as to whether the apparatus has been selected for training a model for managing a network.

According to an aspect there is provided a method comprising: sending, to a central node, local dataset information comprising characteristics of a local dataset of an apparatus; and means for receiving, from the central node, an indication as to whether the apparatus has been selected for training a model for managing a network.

According to an aspect there is provided a computer program comprising computer executable code which when run on at least one processor is configured to: send, to a central node, local dataset information comprising characteristics of a local dataset of an apparatus; and receive, from the central node, an indication as to whether the apparatus has been selected for training a model for managing a network.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

**In** the above, many different aspects have been described. **It** should be appreciated that further aspects may be provided by the combination of any two or more of the aspects described above.

Various other aspects are also described in the following detailed description and in the attached claims.

### List of abbreviations

- AF:: Application Function
- AMF:: Access and Mobility Management Function
- API:: Application Programming Interface
- BS:: Base Station
- CU:: Centralized Unit
- DL:: Downlink
- DU:: Distributed Unit
- gNB:: gNodeB
- GSM:: Global System for Mobile communication
- HSS:: Home Subscriber Server
- loT:: Internet of Things
- LTE:: Long Term Evolution
- MAC:: Medium Access Control
- MS:: Mobile Station
- MTC:: Machine Type Communication
- MTLF:: Model Training Logical Function
- NEF:: Network Exposure Function
- NF:: Network Function
- NR:: New radio
- NRF:: Network Repository Function
- NWDAF:: Network Data analytics Function
- PDU:: Packet Data Unit
- RAM:: Random Access Memory
- (R)AN:: (Radio) Access Network
- ROM:: Read Only Memory
- SMF:: Session Management Function
- TR:: Technical Report
- TS:: Technical Specification
- UE:: User Equipment
- UMTS:: Universal Mobile Telecommunication System
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a user equipment;
Figure 4 shows a schematic representation of a federated learning mechanism for training a model for managing a network;
Figure 5 shows a schematic representation of a hierarchical federated learning mechanism for training a model for managing a network;
Figure 6 shows a signalling diagram of a first process for training a model for managing a network;
Figure 7 shows a signalling diagram of a second process for training a model for managing a network;
Figure 8 shows a signalling diagram of a third process for training a model for managing a network mapped to SA2;
Figure 9 shows a signalling diagram of a fourth process for training a model for managing a network;
Figure 10 shows a block diagram of a method for training a model for managing a network performed by a central node;
Figure 11 shows a block diagram of a method for training a model for managing a network performed by a distributed node; and
Figure 12 shows a schematic representation of a non-volatile memory medium storing instructions which when executed by a processor allow a processor to perform one or more of the steps of the methods of Figures 10 and 11.

### Detailed Description of the Figures

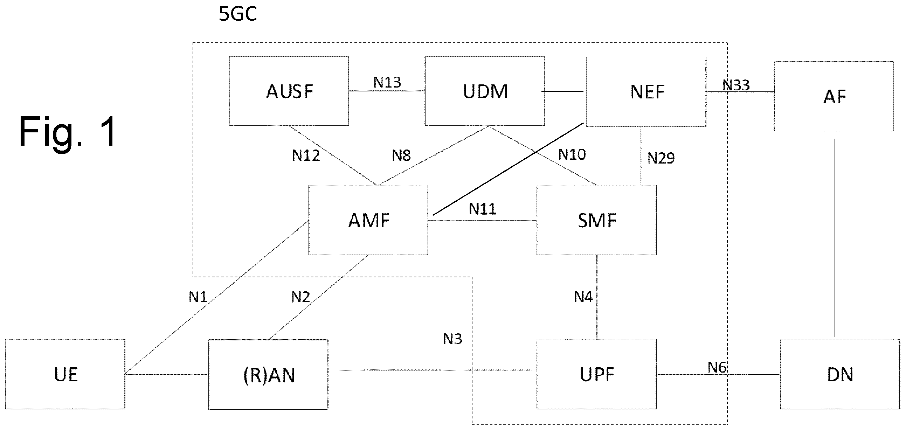

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a user equipment (UE), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF) and/or a network exposure function (NEF).

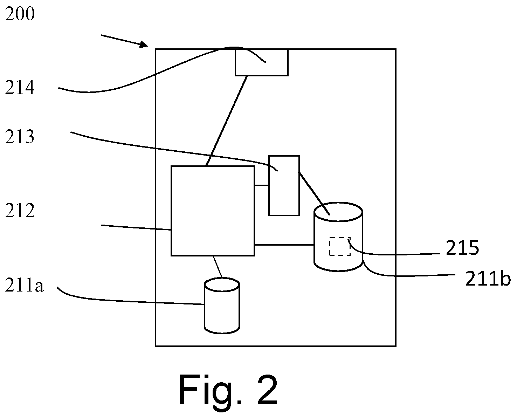

Figure 2 illustrates an example of a control apparatus 200 for controlling a function of the (R)AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

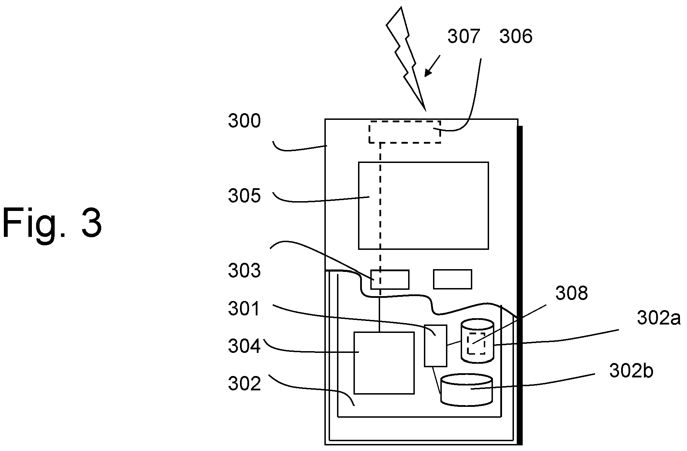

Figure 3 illustrates an example of a UE 300, such as the UE illustrated on Figure 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of this disclosure relate to a mechanism for training a model for managing a network. The model may be an artificial intelligence (AI) or a machine learning (ML) model. The model may be a neural network.

A mechanism for training a model may be implemented by a central node and a plurality of distributed nodes. The central node may comprise a UE, a (R)AN element or a 5GC element. The plurality of distributed nodes may comprise a plurality of UEs, (R)AN elements or 5GC elements. The central node may receive a plurality of local datasets from the plurality of distributed nodes. The plurality of local dataset form a global dataset. The central node may train the model based on the global dataset and may determine centrally trained model parameters (i.e. gradients).

To minimize traffic between the central node and the plurality of distributed nodes a federated learning (FL) mechanism may be used. The central node may send the model with model parameters to the plurality of distributed nodes. In a training iteration, each distributed node may train the model based on a local dataset and may determine locally trained model parameters. The central node may receive the locally trained model parameters and may generate aggregated model parameters based on the locally trained model parameters. The central node may send the aggregated model parameters to the distributed node. The distributed node may update the model with the aggregated model parameters. In a subsequent training iteration, each distributed node may re-train the model based on the local dataset and may determine locally re-trained model parameters. The central node may receive the locally re-trained model parameters and may generate aggregated model parameters. The central node may send the aggregated model parameters to the distributed node. This iterative process may be repeated until the aggregated model parameters converge. The central node may be referred to as a central aggregator (CA). The distributed node may be referred to as a distributed trainer (DT).

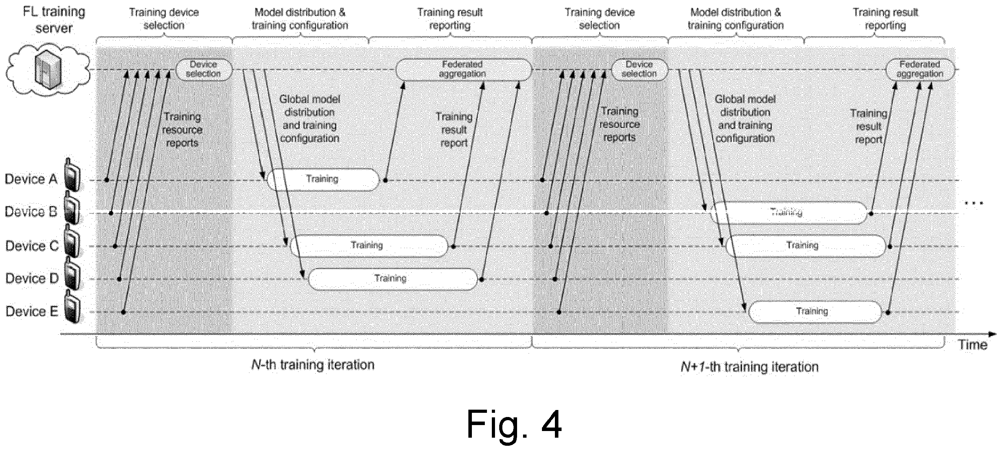

Figure 4 shows a schematic representation of a FL mechanism for training a model for managing a network.

In step 1 of a N-th training iteration, the central node may select (e.g. randomly or based on a selection scheme) distributed nodes to receive (e.g. download) a model for managing a network with model parameters from the central node. The distributed nodes may receive the model for managing the network with the model parameters from the central node. Each distributed node may train the model based on a local dataset and may determine locally trained model parameters. The central node may receive the locally trained model parameters.

In step 2 of the N-th training iteration, the central node may generate aggregated model parameters based on the locally trained model parameters.

In step 3 of the N-th training iteration, the central node may send (e.g. broadcast) the aggregated model parameters to the selected distributed nodes. Alternatively, the central node may send (e.g. broadcast) the aggregated model parameters to the selected distributed nodes and the non-selected distributed nodes.

In step 4 of the N-th training iteration, the selected distributed nodes may update the model with the aggregated model parameters. Alternatively, the selected distributed nodes and the non-selected distributed nodes may update the model with the aggregated model parameters.

Steps 1 to 4 may be repeated in subsequent iteration until the aggregated model parameters converge. In this way, the model may be trained in an optimal manner.

It must be noted that the FL mechanism may comprise different variants, such as a hierarchical FL mechanism. Several layers lay between the distributed nodes and the central node.

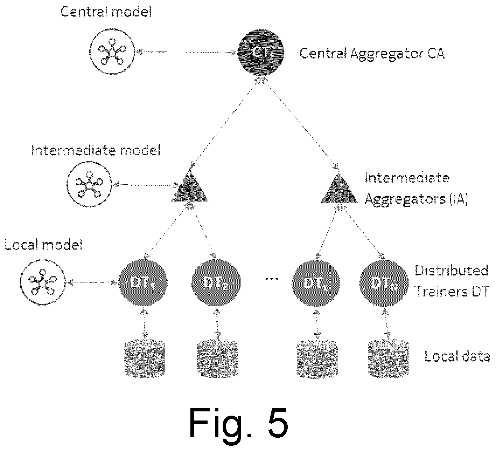

Figure 5 shows a schematic representation of a hierarchical FL mechanism for training a model for managing a network.

It will be understood that in the following the problem and proposed solution consider a FL mechanism however it will be understood that the problem and proposed solution can also be applied to variants of the FL mechanism, such as the hierarchical FL mechanism.

The performance of a FL mechanism may highly depend on the quality of the local datasets of the distributed nodes which are used by the distributed nodes to locally train model parameters. One of the main challenges in distributed node selection is represented by data heterogeneity amongst the local datasets. Local datasets may be biased (i.e. skewed). Different types of bias are discussed in the literature (e.g. Harini Suresh, John Guttang "A Framework for Understanding Sources of Harm throughout the Machine Learning Life Cycle" and Alaa Awad Abdellatif, Naram Mhaisen, Amr Mohamed, Aiman Erbad, Mohsen Guizani, Zaher Dawy, Wassim Nasreddine, "Communication-efficient hierarchical federated learning for IoT heterogeneous systems with imbalanced data", Future Generation Computer Systems). A common bias may be an underrepresented class (e.g. in anomaly detection data objects for anomaly conditions are usually fewer than data objects for normal conditions). Biased local datasets may lead to a model with poor performance and/or that exhibits and reproduces the same biases as the local datasets.

Moreover, the distributed nodes selected by the central node may comprise malicious distributed nodes. The malicious distributed nodes may intentionally perform undesirable behaviours so as to manipulate the locally trained model parameters.

One or more aspects of this disclosure provide a FL mechanism wherein the central node is configured to receive local dataset information from the distributed nodes to detect potential biases of local datasets of the distributed nodes and/or malicious behaviours of the distributed nodes and to determine whether to select the distributed nodes based thereon.

A central node may send, to a distributed node, a model with model parameters.

The distributed node may send, to the central node, local dataset information (also referred to as LocalDatasetInfo) comprising characteristics of a local dataset of the distributed node. A local dataset of the distributed node may be represented as a table as follows.

| | UE ID | RSRP measured by UE for Source cell | RSRP measured by UE for Target cell | Result of HO |
|---|---|---|---|---|
| Data object 1 | UE 1 | XdB | XdB | Success |
| Data object 2 | UE 2 | XdB | XdB | Failure |
| Data object 3 | UE 3 | XdB | XdB | Failure |

A data object may correspond to a row of the table (e.g. data object 1).

A feature may correspond to a column of the table (e.g. RSRP measured by UE for Source cell).

A label may be a value (e.g. "Failure") of a feature predicted by the model (e.g. "Result of HO" and a label may be).

A class may comprise labels with the same value (e.g. "Failure").

The local dataset information may comprises at least one of: a local dataset size, a local dataset statistics or a local dataset bias metrics.

The local dataset size may comprise a number of data objects of the local dataset.

The local dataset statistics may comprise at least one of: a number of labels of a class (i.e. a class size); a number of labels of a class compared to a total number of labels of all classes (i.e. a class distribution which can be expressed as a percentage), a number of missing values of a feature or a range of values of a feature.

The local dataset bias metrics may comprise a difference between a number of labels of a class compared to a total number of labels of all classes and a number of labels of another class over the total number of labels of all classes (i.e. a difference of class distributions). It will be understood that other local dataset bias metrics may be taken into consideration in addition or in lieu of the above local dataset bias metrics (see Sanjiv Das "Fairness Measures for Machine Learning in Finance" and Alexis Cook "Identifying Bias in AI").

The central node may receive, from the distributed node, the local dataset information. The central node may store the local dataset information.

The central node may determine whether to select the distributed node for training a local model for managing a network based on the local dataset information.

The central node may send, to the distributed node, an indication as to whether the distributed node has been selected for training a model for managing a network. For example, managing a network may comprise managing handover, managing traffic steering, managing resource orchestration, managing energy consumption, etc.

In an implementation, the central node may assign a score (e.g. score map) to the distributed node based on the local dataset information. The score may depend on a use case (i.e. an objective of the model and/or features of the local dataset to train the model to achieve the objective of the model). The central node may store the score of the distributed node. The central node may determine whether to select the distributed node for training the model for managing the network based on the score assigned to the distributed node.

For example, the higher the score of the distributed node is, the better the local dataset of the distributed node. A score assigned to the distributed node may be set to 1 when the local dataset is complete (i.e. no feature has a missing value). A score assigned to the distributed node may be set between 0 and 1 when the local dataset is incomplete (i.e. at least one feature has a missing value). The score may be proportional to a ratio between a number of features with a missing value and a total number of features. If the score assigned to the distributed node is above a threshold, the distributed node may be selected for training the model. If the score assigned to the distributed node is below a threshold, the distributed node may not be selected for training the model for managing the network.

In an implementation, the central node may determine whether the distributed node is a potential malicious distributed node based on the local dataset information. For example, the central node may determine whether the distributed node is a potential malicious distributed node based on the class distributions of the local dataset. If the class distribution of the distributed differs from the class distributions of other distributed nodes by a threshold, the central node may determine that the distributed node is a malicious distributed node. The central node may determine whether to select the distributed node for training the model for managing the network based on whether the distributed node is a potential malicious distributed node.

For example, if the distributed node is not a potential malicious distributed node, the distributed node may be selected for training a local model for managing a network. If the distributed node is a potential malicious distributed node, the distributed node may not be selected for training the model for managing a network. Alternatively, if the distributed node is a potential malicious distributed node, the distributed node may be selected for training the model for managing the network. Locally trained model parameters from a malicious distributed node may be given a smaller weigh than locally trained model parameters from a non-malicious distributed node.

In an implementation, the central node may select the distributed node for training the model for managing the network. For example, the central node may select the distributed node for training the model for managing the network if the local dataset of the distributed node is one of the largest local datasets of the distributed node and/or if the score assigned to the distributed node is one of the largest score assigned to the distributed nodes. The central node may send, to the distributed node, an indication that the distributed node has been selected for training the local model for managing the network.

The central node may send, to the distributed node, an indication about a technique to be utilized to update the local dataset based on the local dataset information. For example, if the local dataset information indicates a missing value of a feature, the central node may send, to the distributed node, the technique for addressing missing values in the local dataset. Multiple techniques may be utilized for addressing missing values in the local dataset, such as dropping the feature or filling the feature with different approaches. Preferably, the techniques utilized for addressing missing values in the local dataset should be applied consistently over all local datasets.

The distributed node may locally train model parameters. The distributed node may send, to the central node, the locally trained model parameters. The central node may receive, from the distributed node, locally trained model parameters. The central node may weigh the locally trained model parameters based on the score assigned to the distributed node. For example, the higher the score assigned to the distributed node is, the higher the weight of the locally trained model parameters of the distributed node.

The central node may generate aggregated model parameters based on the locally trained model parameters. The central node may send the aggregated model parameters to all the distributed nodes.

Alternatively, the central node may cluster the distributed node with another distributed node based on the score assigned to the distributed node. The central node may generate cluster specific aggregated model parameters based on the locally trained model parameters. The central node may send the cluster specific aggregated model parameters to the distributed nodes of the cluster for a subsequent iteration.

In an implementation, the central node may send the cluster specific aggregated model parameters to the distributed nodes of the cluster based on the score assigned to the distributed node. For example, the central node may send part of the cluster specific aggregated model parameters to the distributed nodes of the cluster if the score assigned to the distributed node is low. The central node may send all of the cluster specific aggregated model parameters to the distributed nodes of the cluster if the score assigned to the distributed node is low.

The central node may generate aggregated model parameters based on the cluster specific aggregated model parameters. The central node may send the aggregated model parameters to all the distributed nodes for a subsequent iteration.

In an implementation, the central node may determine to not select the distributed node for training the model for managing the network. The central node may send, to the distributed node, an indication that the distributed node has not been selected for training the model for managing the network.

In an implementation, the central node may generate global dataset information characterizing the local dataset in relation to a global dataset and/or the global dataset. The central node may store the global dataset information. The central node may send, to the distributed node, FL training information (also referred to as FLTrainingInfo). The FL training information may comprise the global dataset information and/or the score assigned to the distributed node. The distributed node may determine a local dataset bias based on the local dataset information, the global dataset information and/or the score assigned to the distributed node. The distributed node may update the local dataset to mitigate the local dataset bias. The distributed node may send, to the central node, updated local dataset information comprising characteristics of the updated local dataset. The central node may receive the updated local dataset information.

The global dataset information may comprise at least one of: a global dataset size, a a local data set size compared to a global dataset size (which can be expressed as a percentage), a global dataset bias metrics or a global dataset statistics.

The above iterative process is repeated until the aggregated model parameters converge.

The central node may use the model with the aggregated model parameters to manage the network. Alternatively, the central node may send the aggregated model parameters to a management node. The management node may use the model with the aggregated model parameters to manage the network.

One or more aspects of this disclosure may impact 3GPP TS 28.105 by introducing new information to be exchanged between AI/ML MnS consumer and producer to allow detection and mitigation of biased distributed node.

One or more aspects of this disclosure may impact 3GPP TR 23.700-81 as potential solution for KI #8 "Supported Federated Learning in 5GC".

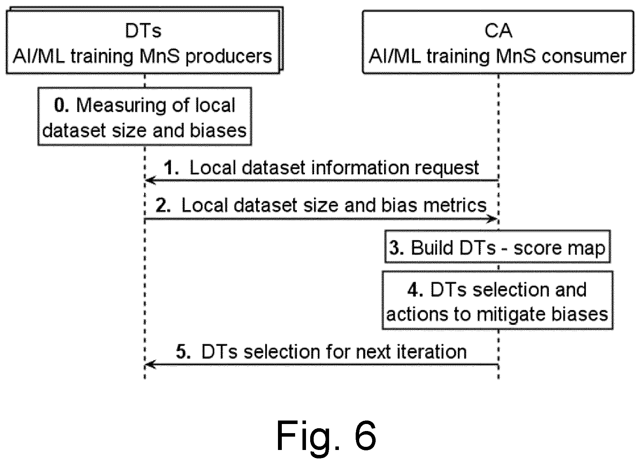

Figure 6 shows a signalling diagram of a first process for training a model for managing a network.

In step 0, each distributed node (e.g. Mns training producer) may determine local dataset information.

In step 1, a central node (e.g. Mns training consumer) may send, to each distributed node, a request to receive local dataset information.

In step 2, each distributed node may send local dataset information to the central node.

In step 3, the central node may assign a score (e.g. score map) to each distributed node based on the local dataset information. The central node may store the score assigned to each distributed node. Additionally or alternatively, the central node may determine whether each distributed node is a malicious distributed node based on the local dataset information.

In step 4, the central node may determine whether to select each distributed node to train the model for a subsequent iteration based on the score assigned to the distributed node and/or whether the distributed node is a malicious distributed node.

In step 5, the central node may send, to each distributed node, an indication as to whether the distributed node has been selected to train the model for the subsequent iteration. In the subsequent iteration, the central node may receive, from each distributed node selected in step 4, locally trained model parameters. The central node may generate aggregated model parameters based on the locally trained model parameters.

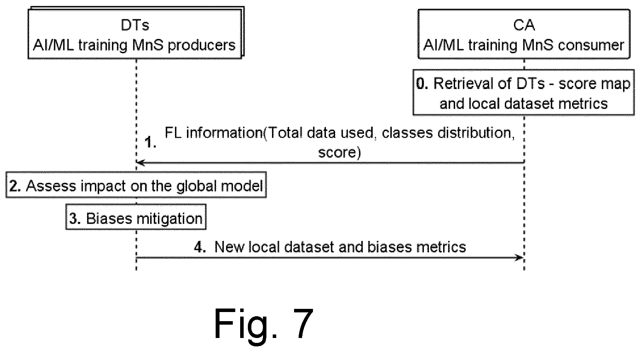

Figure 7 shows a signalling diagram of a second process for training a model for managing a network. It will be understood that the second process may be performed subsequent to the first process.

In step 0, the central node (e.g. Mns training consumer) may retrieve the score assigned to each distributed node (e.g. Mns training producer). The central node may retrieve global dataset information.

In step 1, the central node may send, to each distributed node, the global dataset information and/or the score assigned to the distributed node.

In step 2, each distributed node may determine how its local data set impacts the model and/or if its local dataset is biased.

In step 3, each distributed node may take action to adjust how its local data set impacts the training of the model and/or to mitigate a local dataset bias. For example, an action may comprise performing a new local dataset collection to generate an updated local dataset. It will be understood that other action may be contemplated (see Alaa Awad Abdellatif, Naram Mhaisen, Amr Mohamed, Aiman Erbad, Mohsen Guizani, Zaher Dawy, Wassim Nasreddine, "Communication-efficient hierarchical federated learning for IoT heterogeneous systems with imbalanced data", Future Generation Computer Systems).

In step 4, each distributed node may send updated local dataset information to the central node.

Steps 1 to 4 may be performed by distributed nodes selected by the central node to train the model for a subsequent iteration and/or distributed nodes not selected by the central node to train the model for a subsequent iteration

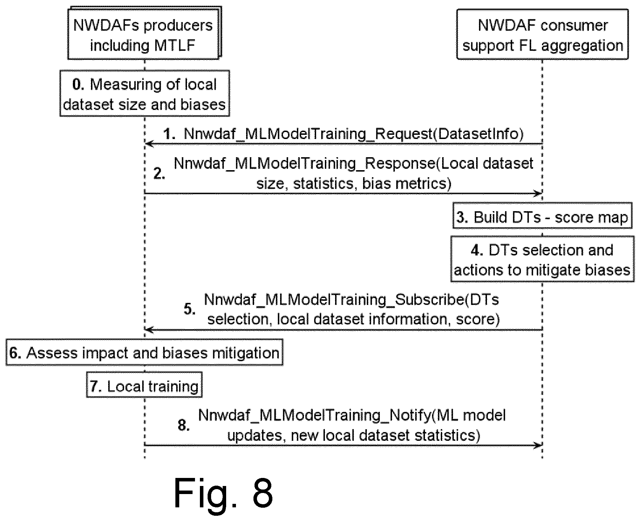

Figure 8 shows a signalling diagram of a third process for training a model for managing a network mapped to SA2. The third process may combine the first process and the second process.

In step 0, each distributed node (e.g. NWDAF producer) may determine local dataset information.

In step 1, a central node (e.g. NWDAF consumer) may send, to each distributed node, a request to receive local dataset information.

In step 2, each distributed node may send local dataset information to the central node.

In step 3, the central node may assign a score (e.g. score map) to each distributed node based on the local dataset information. The central node may store the score assigned to each distributed node. Additionally or alternatively, the central node may determine whether each distributed node is a malicious distributed node based on the local dataset information.

In step 4, the central node may determine whether to select each distributed node to train the model for a subsequent iteration based on the score assigned to the distributed node and/or whether the distributed node is a malicious distributed node.

In step 5, the central node may send, to each distributed node, an indication as to whether the distributed node has been selected to train the model for the subsequent iteration. In the subsequent iteration, the central node may receive, from each distributed node selected in step 4, locally trained model parameters. The central node may generate aggregated model parameters based on the locally trained model parameters.

In step 5, the central node may retrieve the score assigned to each distributed node. The central node may retrieve global dataset information. The central node may send, to each distributed node, the global dataset information and/or the score assigned to the distributed node.

In step 6, each distributed node may determine how its local data set impacts the training of the model and/or if its local dataset is biased.

In step 6, each distributed node may take action to adjust how its local data set impacts the model and/or to mitigate a local dataset bias. For example, an action may comprise performing a new local dataset collection to generate an updated local dataset. It will be understood that other action may be contemplated (see Alaa Awad Abdellatif, Naram Mhaisen, Amr Mohamed, Aiman Erbad, Mohsen Guizani, Zaher Dawy, Wassim Nasreddine, "Communication-efficient hierarchical federated learning for IoT heterogeneous systems with imbalanced data", Future Generation Computer Systems).

In step 7, each distributed node selected train the model in a subsequent iteration may determine local trained model parameters.

In step 8, each distributed node may send local trained model parameters and/or updated local dataset information to the central node.

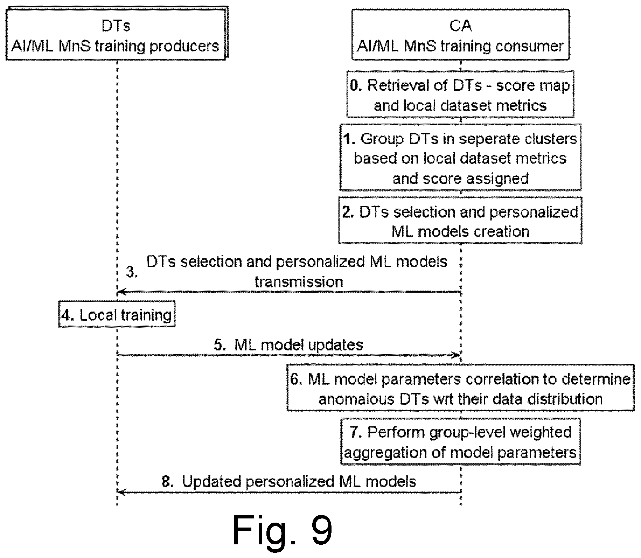

Figure 9 shows a signalling diagram of a fourth process for training a model for managing a network.

In step 0, a central node (e.g. Mns training consumer) may retrieve the score assigned to each distributed node. The central node may retrieve the local dataset information of each distributed node (e.g. Mns training producer).

In step 1, the central node may cluster the distributed nodes based on the score assigned to each distributed node and/or the local dataset information of each distributed node.

In step 2, the central node may select the distributed nodes for a subsequent iteration based on the score assigned to each distributed node and/or the local dataset information of each distributed node. The central node may generate cluster specific model parameters.

In step 3, the central node may send, to each distributed node, an indication as to whether the distributed node has been selected to train the model for a subsequent iteration. The central node may send, to each distributed node, the score assigned to the distributed node. The central node may send, to each distributed node, the cluster specific model parameters. The central node may send, to each distributed node, global dataset information. The central node may send, to each distributed node, a technique to be utilized to update the local dataset based on the local dataset information

In step 4, each distributed node may update the local dataset based on the technique. Each distributed node selected to train the model for the subsequent iteration may locally train model parameters based on the cluster specific model parameters and its local dataset.

In step 5, each distributed node selected to train the model for the subsequent iteration may send, to the central node, the locally train model parameters.

In step 6, the central node may determine whether each distributed node selected to train the model for the subsequent iteration is a malicious distributed node based on the local dataset information (e.g. based on the class distributions).

In step 7, the central node may weight the locally trained model parameters based on whether each distributed node selected to train the model for the subsequent iteration is a malicious distributed node. The central node may aggregate the locally train model parameters to generate aggregated cluster specific model parameters.

In step 8, the central node may send, to each distributed node, aggregated cluster specific model parameters.

In light of the above it will be understood the standards may be amended to introduce new attributes and datatypes.

For example, a LocalDatasetInfo datatype may be introduced. LocalDatasetInfo may be shared by each distributed node with the central node. LocalDatasetInfo may include the following attributes.

| **Attribute** | **Description** |
|---|---|
| DT ID | ID of the DT. |
| > Task ID | ID of the task that would be solved by using the requested local dataset. (e.g. NWDAF Analytics ID). |
| Local Dataset ID | ID of the local dataset. |
| > Local dataset version | Version of the local dataset. Each time the dataset is updated for example by collecting new data the version may be updated. |
| > Local dataset statistics | Statistics of the local dataset |
| > Local dataset bias metric | Bias metrics of the local dataset |
| > Local dataset size | Size of the local dataset. |

A FLTrainingInfo datatype may be introduced. FLTrainingInfo may be shared by the central node to the distributed nodes. FLTrainingInfo may include the following attributes.

| **Attribute** | **Description** |
|---|---|
| Central node ID | ID of the central node. |
| > Task ID | ID of the task for which the FL training mechanism is performed (e.g. NWDAF Analytics ID). |
| FL training iteration | FL training epoch. |
| > Global dataset information | Information about the global dataset used to train the model in the FL training iteration. |
| > Score | Score assigned to a local dataset in the FL training iteration. |
| DT selection | Flag to indicate if a distributed node is selected or not for a next FL training iteration. |

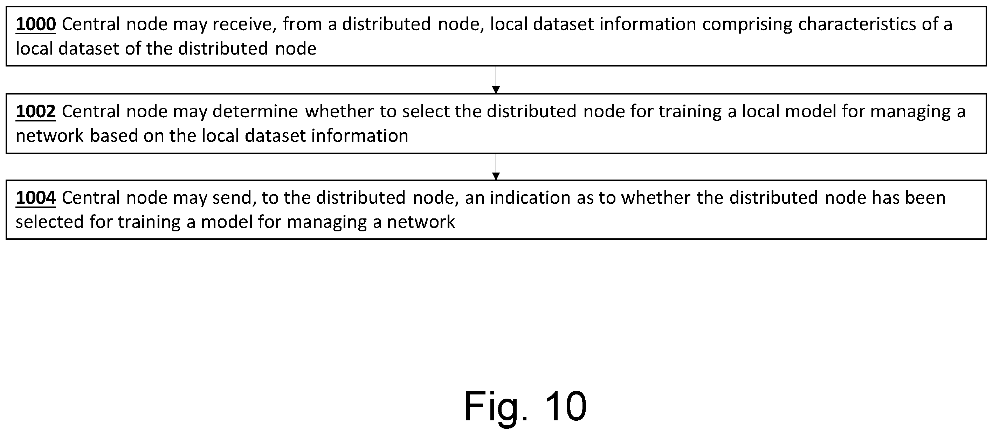

Figure 10 shows a block diagram of a method for training a model for managing a network performed by a central node.

In step 1000, the central node may receive, from a distributed node, local dataset information comprising characteristics of a local dataset of the distributed node.

In step 1002, the central node may determine whether to select the distributed node for training a local model for managing a network based on the local dataset information.

In step 1004, the central node may send, to the distributed node, an indication as to whether the distributed node has been selected for training a model for managing a network.

The local dataset information may comprise at least one of: a local dataset size, a local dataset statistics or a local dataset bias metrics.

The local dataset size may comprise a number of data objects of the local dataset.

The local dataset statistics may comprise at least one of: a number of labels of a class (i.e. a class size); a number of labels of a class compared to a total number of labels of all classes (i.e. a class distribution which can be expressed as a percentage), a missing value of a feature or a range of values of a feature.

The local dataset bias metrics may comprise a difference between a number of labels of a class compared to a total number of labels of all classes and a number of labels of another class over the total number of labels of all classes (i.e. a difference of class distributions).

The central node may assign a score to the distributed node based on the local dataset information. The central node may determine whether to select the distributed node for training the model for managing the network based on the score assigned to the distributed node. If the score assigned to the distributed node is above a threshold, the distributed node may be selected for training the model for managing the network. If the score assigned to the distributed node is below a threshold, the distributed node may not be selected for training the model for managing the network.

The central node may determine whether the distributed node is a potential malicious distributed node based on the local dataset information. The central node may determine whether to select the distributed node for training the model for managing the network based on whether the distributed node is a potential malicious distributed node. If the distributed node is a potential malicious distributed node, the distributed node may not be selected for training the model for managing a network. Alternatively, if the distributed node is a potential malicious distributed node, the distributed node may be selected for training the model for managing the network. Locally trained model parameters from a malicious distributed node may be given a smaller weigh than locally trained model parameters from a non-malicious distributed node. If the distributed node is not a potential malicious distributed node, the distributed node may be selected for training a local model for managing a network.

The central node may select the distributed node for training the model for managing the network. The central node may send, to the distributed node, an indication that the distributed node has been selected for training the local model for managing the network. The central node may receive, from the distributed node, locally trained model parameters.

The central node may generate aggregated model parameters based on the locally trained model parameters.

The central node may cluster the distributed node with another distributed node based on the score assigned to the distributed node. The central node may generate cluster specific aggregated model parameters based on the locally trained model parameters.

The central node may determine to not select the distributed node for training the model for managing the network. The central node may send, to the distributed node, an indication that the distributed node has not been selected for training the model for managing the network.

The central node may send, to the distributed node, global dataset information characterizing the local dataset in relation to a global dataset and/or a global dataset and/or means for sending a score assigned to the distributed node. The central node may receive updated local dataset information comprising characteristics of an updated local dataset of the distributed node.

The global dataset information may comprise at least one of: a global dataset size, a a local data set size compared to a global dataset size (which can be expressed as a percentage), a global dataset bias metrics or a global dataset statistics.

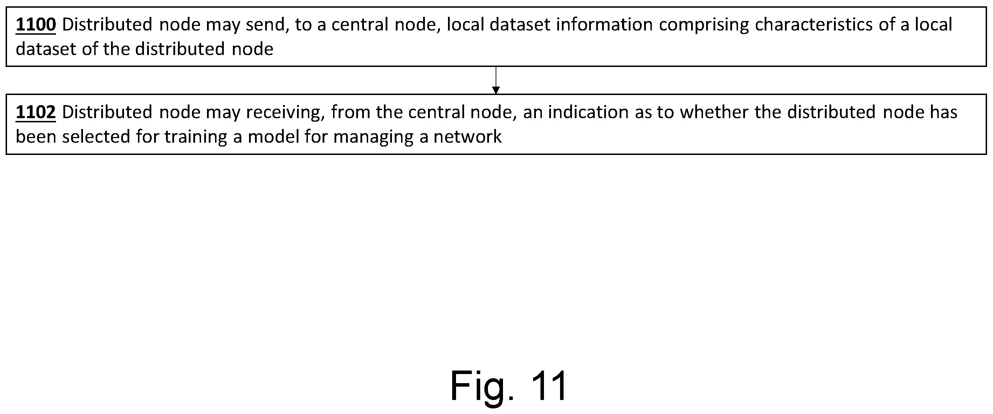

Figure 11 shows a block diagram of a method for training a model for managing a network performed by a distributed node,

In step 1100, the distributed node may send, to a central node, local dataset information comprising characteristics of a local dataset of the distributed node.

In step 1102, the distributed node may receive, from the central node, an indication as to whether the distributed node has been selected for training a model for managing a network.

The distributed node may receive, from the central node, an indication that the distributed node has been selected for training the model for managing the network. The distributed node may locally train model parameters. The distributed node may send, to the central node, the locally trained model parameters.

The distributed node may receive, from the central node, global dataset information and/or a score assigned to the distributed node based on the local dataset information. The distributed node may determine a local dataset bias based on the local dataset information, the global dataset information and/or the score assigned to the distributed node. The distributed node may update the local dataset to mitigate the local dataset bias. The distributed node may send, to the central node, updated local dataset information comprising characteristics of the updated local dataset.

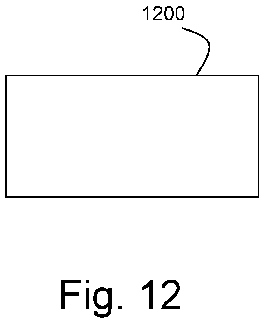

Figure 12 shows a schematic representation of non-volatile memory media 1200 storing instructions and/or parameters which when executed by a processor allow the processor to perform one or more of the steps of the methods of Figures 10 and 11.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figures 10 and 11, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising:
means for receiving (1000), from a distributed node, local dataset information comprising characteristics of a local dataset of the distributed node;
means for assigning a score to the distributed node and/or determining whether the distributed node is a potential malicious distributed node based on the local dataset information;
means for determining (1002) whether to select the distributed node for training a local model for managing a network in a federated learning mechanism based on the score assigned to the distributed node and/or whether the distributed node is a potential malicious distributed node; and
means for sending (1004), to the distributed node, an indication as to whether the distributed node has been selected for training a model for managing a network in a federated learning mechanism.

2. The apparatus of claim 1, wherein the local dataset information comprises at least one of: a local dataset size, a local dataset statistics or a local dataset bias metrics.

3. The apparatus of claim 1 or claim 2, comprising:
means for selecting the distributed node for training the model for managing the network;
means for sending, to the distributed node, an indication that the distributed node has been selected for training the local model for managing the network; and
means for receiving, from the distributed node, locally trained model parameters.

4. The apparatus of claim 3, comprising:
means for generating aggregated model parameters based on the locally trained model parameters.

5. The apparatus of claim 3, comprising:
means for clustering the distributed node with another distributed node based on the score assigned to the distributed node; and
means for generating cluster specific aggregated model parameters based on the locally trained model parameters.

6. The apparatus of claim 1, comprising:
means for determining to not select the distributed node for training the model for managing the network; and
means for sending, to the distributed node, an indication that the distributed node has not been selected for training the model for managing the network.

7. The apparatus of any of claims 1 to 5, comprising:
means for sending, to the distributed node, global dataset information characterizing the local dataset in relation to a global dataset and/or a global dataset and/or means for sending a score assigned to the distributed node; and
means for receiving updated local dataset information comprising characteristics of an updated local dataset of the distributed node.

8. A method comprising:
receiving (1000), from a distributed node, local dataset information comprising characteristics of a local dataset of the distributed node;
assigning a score to the distributed node and/or determining whether the distributed node is a potential malicious distributed node based on the local dataset information;
determining (1002) whether to select the distributed node for training a local model for managing a network in a federated learning mechanism based on the score assigned to the distributed node and/or whether the distributed node is a potential malicious distributed node ; and
sending (1004), to the distributed node, an indication as to whether the distributed node has been selected for training a model for managing a network in a federated learning mechanism.

9. A computer program comprising computer executable instructions which when run on one or more processors perform the steps of the method of claim 8.

## Patentansprüche

1. Einrichtung, die Folgendes umfasst:
Mittel zum Empfangen (1000) von lokalen Datensatzinformationen, die Eigenschaften eines lokalen Datensatzes eines verteilten Knotens umfassen, vom verteilten Knoten;
Mittel zum Zuweisen einer Bewertung des verteilten Knotens und/oder Bestimmen auf Basis der lokalen Datensatzinformationen, ob der verteilte Knoten ein potenziell bösartiger verteilter Knoten ist;
Mittel zum Bestimmen (1002) auf Basis der Bewertung, die dem verteilten Knoten zugewiesen ist, ob der verteilte Knoten zum Trainieren eines lokalen Modells zum Verwalten eines Netzwerks in einem föderierten Lernmechanismus auszuwählen ist und/oder ob der verteilte Knoten ein potenziell bösartiger verteilter Knoten ist; und
Mittel zum Senden (1004) einer Anzeige dazu, ob der verteilte Knoten zum Trainieren eines Modells zum Verwalten eines Netzwerks in einem föderierten Lernmechanismus ausgewählt wurde, an den verteilten Knoten.

2. Einrichtung nach Anspruch 1, wobei die lokalen Datensatzinformationen mindestens eines von Folgendem umfassen: einer lokalen Datensatzgröße, einer lokalen Datensatzstatistik oder einer lokalen Datensatzbiasmetrik umfassen.

3. Einrichtung nach Anspruch 1 oder Anspruch 2, die Folgendes umfasst:
Mittel zum Auswählen des verteilten Knotens zum Trainieren des Modells zum Verwalten des Netzwerks;
Mittel zum Senden einer Anzeige, dass der verteilte Knoten zum Trainieren des lokalen Modells zum Verwalten des Netzwerks ausgewählt wurde, an den verteilten Knoten; und
Mittel zum Empfangen von lokal trainierten Modellparametern vom verteilten Knoten.

4. Einrichtung nach Anspruch 3, die Folgendes umfasst:
Mittel zum Erzeugen von aggregierten Modellparametern auf Basis der lokal trainierten Modellparameter.

5. Einrichtung nach Anspruch 3, die Folgendes umfasst:
Mittel zum Clustern des verteilten Knotens mit einem anderen verteilten Knoten auf Basis der Bewertung, die dem verteilten Knoten zugewiesen wurde; und
Mittel zum Erzeugen von clusterspezifischen aggregierten Modellparametern auf Basis der lokal trainierten Modellparameter.

6. Einrichtung nach Anspruch 1, die Folgendes umfasst:
Mittel zum Bestimmen, den verteilten Knoten nicht zum Trainieren des Modells zum Verwalten des Netzwerks auszuwählen; und
Mittel zum Senden einer Anzeige, dass der verteilte Knoten nicht zum Trainieren des Modells zum Verwalten des Netzwerks ausgewählt wurde, an den verteilten Knoten.

7. Einrichtung nach einem der Ansprüche 1 bis 5, die Folgendes umfasst:
Mittel zum Senden von globalen Datensatzinformationen, die den lokalen Datensatz mit Bezug auf einen globalen Datensatz charakterisieren, und/oder eines globalen Datensatzes und/oder Mittel zum Senden einer Bewertung, die dem verteilten Knoten zugewiesen ist; an den verteilten Knoten; und
Mittel zum Empfangen von aktualisierten lokalen Datensatzinformationen, die Eigenschaften eines aktualisierten lokalen Datensatzes des verteilten Knotens umfassen.

8. Verfahren, das Folgendes umfasst:
Empfangen (1000) von lokalen Datensatzinformationen, die Eigenschaften eines lokalen Datensatzes eines verteilten Knotens umfassen, vom verteilten Knoten;
Zuweisen einer Bewertung des verteilten Knotens und/oder Bestimmen auf Basis der lokalen Datensatzinformationen, ob der verteilte Knoten ein potenziell bösartiger verteilter Knoten ist;
Bestimmen (1002) auf Basis der Bewertung, die dem verteilten Knoten zugewiesen ist, ob der verteilte Knoten zum Trainieren eines lokalen Modells zum Verwalten eines Netzwerks in einem föderierten Lernmechanismus auszuwählen ist und/oder ob der verteilte Knoten ein potenziell bösartiger verteilter Knoten ist; und
Senden (1004) einer Anzeige dazu, ob der verteilte Knoten zum Trainieren eines Modells zum Verwalten eines Netzwerks in einem föderierten Lernmechanismus ausgewählt wurde, an den verteilten Knoten.

9. Computerprogramm, das computerausführbare Anweisungen umfasst, die, wenn sie auf einem oder mehreren Prozessoren ausgeführt werden, die Schritte des Verfahrens nach Anspruch 8 durchführen.

## Revendications

1. Appareil comprenant :
des moyens pour recevoir (1000) d'un nœud distribué des informations d'ensemble de données locales comprenant des caractéristiques d'un ensemble de données locales du nœud distribué ;
des moyens pour attribuer un score au nœud distribué et/ou déterminer si le nœud distribué est un nœud distribué potentiellement malveillant sur la base des informations d'ensemble de données locales ;
des moyens pour déterminer (1002) s'il faut sélectionner le nœud distribué pour entraîner un modèle local pour gérer un réseau dans un mécanisme d'apprentissage fédéré sur la base du score distribué au nœud distribué et/ou si le nœud distribué est un nœud distribué potentiellement malveillant ; et
des moyens pour envoyer (1004) au nœud distribué une indication précisant si le nœud distribué a été sélectionné pour entraîner un modèle pour gérer un réseau dans un mécanisme d'apprentissage fédéré.

2. Appareil selon la revendication 1, dans lequel les informations d'ensemble de données locales comprennent au moins un parmi : une taille d'ensemble de données locales, des statistiques d'ensemble de données locales ou des métriques de biais d'ensemble de données locales.

3. Appareil selon la revendication 1 ou la revendication 2, comprenant :
des moyens pour sélectionner le nœud distribué pour entraîner le modèle pour gérer le réseau ;
des moyens pour envoyer au nœud distribué une indication selon laquelle le nœud distribué a été sélectionné pour entraîner le modèle local pour gérer le réseau ; et
des moyens pour recevoir du nœud distribué des paramètres de modèle entraîné localement.

4. Appareil selon la revendication 3, comprenant :
des moyens pour générer des paramètres de modèle agrégés sur la base des paramètres de modèle entraîné localement.

5. Appareil selon la revendication 3, comprenant
des moyens pour regrouper le nœud distribué avec un autre nœud distribué sur la base du score distribué au nœud distribué ; et
des moyens pour générer des paramètres de modèle agrégés spécifiques de grappe sur la base des paramètres de modèle entraîné localement.

6. Appareil selon la revendication 1, comprenant :
des moyens pour déterminer de ne pas sélectionner le nœud distribué pour entraîner le modèle pour gérer le réseau ; et
des moyens pour envoyer au nœud distribué une indication selon laquelle le nœud distribué n'a pas été sélectionné pour entraîner le modèle pour gérer le réseau.

7. Appareil selon l'une des revendications 1 à 5, comprenant :
des moyens pour envoyer au nœud distribué des informations d'ensemble de données mondiales caractérisant l'ensemble de données locales en rapport avec un ensemble de données mondial et/ou un ensemble de données mondial et/ou des moyens pour envoyer un score distribué au nœud distribué ; et
des moyens pour recevoir des informations d'ensemble de données locales mises à jour comprenant des caractéristiques d'un ensemble de données locales mis à jour du nœud distribué.

8. Procédé comprenant les étapes suivantes :
recevoir (1000) d'un nœud distribué des informations d'ensemble de données locales comprenant des caractéristiques d'un ensemble de données locales du nœud distribué ;
attribuer un score au nœud distribué et/ou déterminer si le nœud distribué est un nœud distribué potentiellement malveillant sur la base des informations d'ensemble de données locales ;
déterminer (1002) s'il faut sélectionner le nœud distribué pour entraîner un modèle local pour gérer un réseau dans un mécanisme d'apprentissage fédéré sur la base du score distribué au nœud distribué et/ou si le nœud distribué est un nœud distribué potentiellement malveillant ; et
envoyer (1004) au nœud distribué une indication précisant si le nœud distribué a été sélectionné pour entraîner un modèle pour gérer un réseau dans un mécanisme d'apprentissage fédéré.

9. Programme informatique comprenant des instructions exécutables par ordinateur qui, lorsqu'elles sont exécutées sur un ou plusieurs processeurs, effectuent les étapes du procédé selon la revendication 8.
